(19) Europäisches Patentamt
European Patent Office
Office européen des brevets

(11) **EP 3 575 740 A1**

(12) **EUROPEAN PATENT APPLICATION**

(43) Date of publication:
**04.12.2019 Bulletin 2019/49**

(51) Int Cl.:
**G01B 11/14** (2006.01)  **G01S 17/58** (2006.01)
**G01P 3/36** (2006.01)

(21) Application number: **19174475.4**

(22) Date of filing: **14.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.05.2018  JP 2018104917**

(71) Applicant: **CANON KABUSHIKI KAISHA**
**Ohta-ku**
**Tokyo 146-8501 (JP)**

(72) Inventor: **OTA, Takefumi**
**Ohta-ku, Tokyo 146-8501 (JP)**

(74) Representative: **Saunders, Mark**
**Canon Europe Limited**
**3 The Square**
**Stockley Park**
**Uxbridge, Middlesex UB11 1ET (GB)**

(54) **MEASURING DEVICE AND PROCESSING DEVICE**

(57)    A measuring device measures a displacement amount or a velocity of a measured object (203), the measuring device including an irradiation optical system (202) that irradiates the measured object (203), a collection optical system (206) that collects a first beam and a second beam emitted from the measured object (203) so as to overlap the first beam and the second beam on each other, a first detector (208) that detects superimposed light in which the first beam and the second beam are superimposed on each other, and a second detector (209) that detects a partial beam of the emitted beam emitted from the collection optical system (206). A detection result of the second detector (209) changes according to a distance (z) between the measuring device and the measured object (203).

FIG. 1

EP 3 575 740 A1

**Description**

BACKGROUND OF THE INVENTION

Field of the Invention

The present invention relates to a measuring device that uses light, in particular, a non-contact displacement meter (a velocimeter), and to a processing device using the same.

Description of the Related Art

Japanese Patent Laid-Open No. 7-229911 proposes, as a known non-contact displacement meter, a velocimeter (a length measuring instrument) that measures a speed (or velocity) in a moving direction or a length of an object to be measured.

Japanese Patent Laid-Open No. 7-229911 describes a laser Doppler displacement meter that splits light output from a light source into two and that superimposes the two beams on a measured object. When the measured object passes through a region in which the two beams irradiated towards the measured object from different directions overlap each other, beams of scattered light based on the two beams are generated. By detecting, with a detector, an interference light generated by the beams of scattered light, displacement (a speed) of the measured object can be detected.

However, the velocimeter described in Japanese Patent Laid-Open No. 7-229911 can only detect the displacement of the measured object in the region where the two beams overlap each other. Accordingly, there is a problem that when the region where the two beams overlap each other is enlarged, in other words, when the measurable region is enlarged, the irradiation optical system becomes considerably large.

SUMMARY OF THE INVENTION

The present invention in its first aspect provides a measuring device as specified in claims 1 to 17.
The present invention in its second aspect provides a measuring system as specified in claim 18.
The present invention in its third aspect provides a processing device as specified in claim 19.
Further features of the present invention will become apparent from the following description of exemplary embodiments with reference to the attached drawings.

BRIEF DESCRIPTION OF THE DRAWINGS

Fig. 1 is a diagram illustrating an outline of a known displacement meter.
Figs. 2A and 2B are diagrams illustrating an outline of a displacement meter of the present embodiment.
Fig. 3 is a diagram illustrating a second example embodiment.

DESCRIPTION OF THE EMBODIMENTS

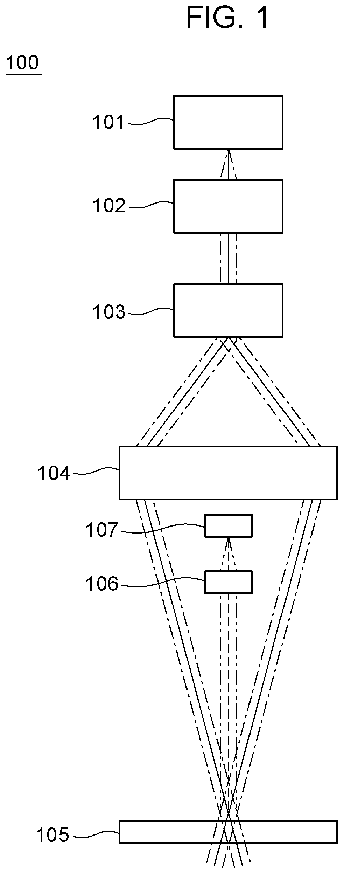

In the laser Doppler method, light emitted from a light source is shaped into an irradiation beam and is irradiated on a moving object (the moving object is illuminated with the light from a light source). An optical frequency of the light scattered by the moving object is changed due to the Doppler frequency shift and a beat frequency is generated in an interference signal. A moving speed of the moving object is calculated by observing the component of the above frequency.
A principle of a velocimeter based on the laser Doppler method will be described using a configuration of a known laser Doppler displacement meter (a velocimeter or a measuring device that use light).
An outline of a configuration of a known laser Doppler displacement meter is illustrated in Fig. 1.
Light output from a light source 101 is propagated through a collimator lens 102 and is turned into parallel light. In the above, while the light (a beam) from the light source is converted into a parallel beam through the action of the collimator lens, the conversion is not limited to such a conversion, and the light may be converted into a converged beam. A wavelength of the light output from the light source is referred to as $\lambda$. Subsequently, the beam is split into two beams with a light splitting element 103 such as a diffraction grating or a beam splitter. Each beam is collected to a certain position with a collection optical system 104. An angle at which the above light is collected is referred to as $\psi$. When a measured object 105 is at a position where the two beams overlap each other, interference light by the two beams are scattered, and the scattered light is detected by a light receiving unit 107 via a light receiving optical system 106. In the above, when V is a moving speed (or velocity) of the measured object 105 and F is a frequency of the detected signal, the following relational expression (1) is obtained. From the frequency of the detected signal, the moving speed V of the measured object is obtained with (1). Movement displacement of the measured object can be calculated through time integration of the moving speed V. With the above, the known laser Doppler displacement meter functions as a displacement meter.

$$V = \frac{F \cdot \lambda}{2 \cdot \sin \varphi} \qquad (1)$$

Furthermore, a mechanism that modulates the frequency of light, such as an opto-acoustic optical modulator (AOM), an electro-optic modulator (EOM), or an optical path length change element may be provided between the light splitting element 103 and a light condensing position that is where the two beams overlap each other. With the above, the two beams will have optical frequencies different from each other, and even when the measured object is stationary, the detection signal will have a frequency component of a beat frequency, and a speed 0 will be detectable.

With expression (1), a highly accurate measurement of speed (or velocity) can be achieved by, regarding the beams of scattered light interfering with each other, accurately determining the propagation angle of the scattered light from the moving object, and the wavelength.

In the known laser Doppler displacement meter described in Japanese Patent Laid-Open No. 7-229911, the irradiation angles of the two beams are based on an optical design and, furthermore, the position of the light receiving unit is fixed; accordingly, the propagation angle of the scattered light is determined. The speed (or velocity) can be calculated due to the above.

A feature of the present embodiment is that the irradiation light is a single beam, and a distance measuring mechanism that measures the distance to the measured object (that obtains distance information) is included. The light irradiated on the measured object is scattered to various directions, propagates the light receiving optical system, and is received by the light receiving unit. The light receiving unit outputs an electric signal having a frequency corresponding to F in expression (1). Since the irradiation light is a single beam, the optical path is determined, and the distance measuring mechanism measures the distance between the device and the measured object (the distance information is obtained); accordingly, the angle of the received scattered light is known. The wavelength of the irradiation light is determined by the specification of the light source. As described above, by substituting the frequency F of the electric signal from the light receiving unit and a reference angle calculated by the distance measurement mechanism into expression (1), the moving speed (or velocity) of the measured object can be calculated.

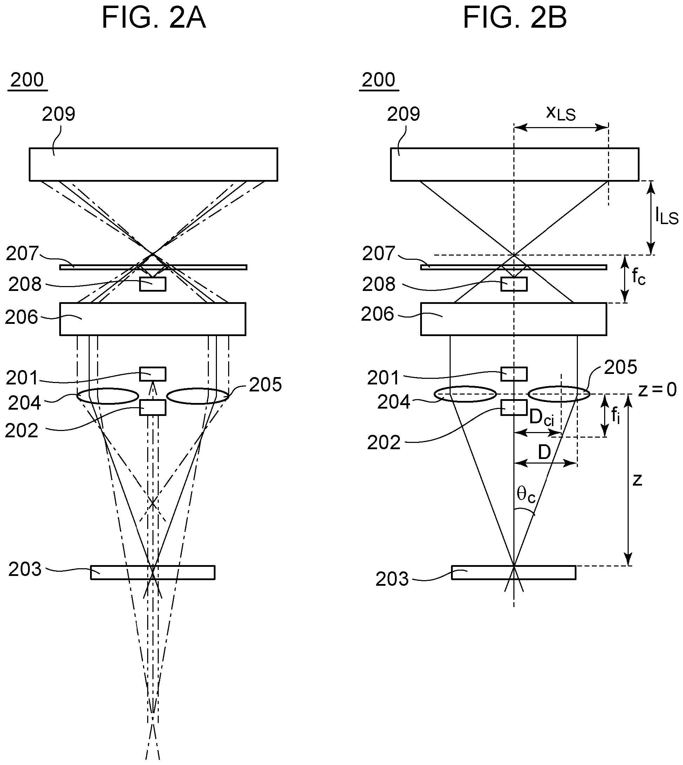

Referring to Figs. 2A and 2B, an outline of a laser Doppler displacement meter (an optical Doppler displacement meter, a laser Doppler velocimeter, or an optical Doppler velocimeter) of the present embodiment will be described. Reference numerals of components will be denoted in Fig. 2A, and captions of expressions used below to describe the principle will be denoted in Fig. 2B. A measuring device of an example embodiment detects a moving amount (a displacement amount) or a moving speed (or velocity) of a measured object (an object to be measured or a moving object) 203 in the left-right direction (normally, either one direction between the left direction and the right direction) in Figs. 2A and 2B. In the above, there are cases in which the measured object itself moves slightly in the up-down direction (the up-down direction in the drawing of Figs. 2A and 2B or the direction in which the distance to the measuring device changes) when the measured object moves in the left-right direction. An error occurs in the measurement result due to the movement of the measured object in the up-down direction. The measuring device of the present example embodiment reduces such an error.

A collimator lens (an irradiation optical system or an illumination optical system) 202 first converts (shapes) the light output form a light source 201 into parallel light (substantially parallel light), and irradiates (illuminates) the parallel light (an irradiation beam) onto the measured object 203. In the above, an absolute value of an angle (an incident angle of the parallel light to the measured object) between the parallel light and a direction in which a line normal to an illuminated surface of the measured object extends is preferably less than 10 degrees (more preferably, less than 5 degrees). Note that the direction normal to the illuminated surface of the measured object may be read as a direction perpendicular to the moving direction of the measured object.

A portion of the light scattered by the measured object 203 (the light via the measured object or the light emitted from the measured object) is incident on a first light receiving optical system 204 on a first optical path, and another portion thereof is incident on a second light receiving optical system 205 on a second optical path. Furthermore, a collection optical element (a collection optical system or a superimposing optical system) 206 has refractive power (optical power or a focal length) that overlaps the beams emitted from the first and second light receiving optical systems on each other (overlapping at a single point). Note that the collection optical element 206 does not necessarily actually overlap the beams emitted from the first and second light receiving optical systems, and in case there is no optical system after the collection optical element, then it is only sufficient that the collection optical element 206 has refractive power in which the beams emitted from the first and second light receiving optical systems overlap each other.

A portion of the beam (the emitted beam) emitted from the collection optical element (the collection optical system) 206 is separated, and the beams emitted from the first light receiving optical system and the second light receiving optical system are, in an overlapped state, incident on a light receiving element 20. The light receiving element 208 detects a beam (a superimposed beam or a beam in which an interference has occurred due to the overlap) that is a beam in which beams scattered in different directions from the measured object (the beams incident on the first and second light receiving optical systems) are in an overlapped state. In an example embodiment, the light splitting element 207 is disposed on the optical path immediately after the collection optical element 206 and before the two beams overlap each other; however, the configuration is not limited thereto, and the light splitting element 207 may be disposed at a position at which the two beams overlap each other, or at a position where the two beams have separated from each other after overlapping each other.

Other portions of the beams emitted from the collection optical element are incident on a distance measuring mechanism (a light receiving element) 209 disposed at a position at which the beams from the first and second light receiving optical systems are not collected at a single point (a position different from a focal position of the collection optical element). The distance measuring mechanism (the light receiving element) 209 is configured so that an incident position of the scattered light from the measured object differs according to the position of the measured object 203 (the distance from the measuring device or the distance from the first and second light receiving optical systems). In other words, when the position of the measured object in the Z direction changes, the position (the incident position of the light inside the detector) of the scattered light from the measured object incident on the light receiving element (a photoelectric conversion element) in the distance measuring mechanism changes. Accordingly, the distance to the measured object or $\theta c$ described later can be obtained from a detection result of the distance measuring mechanism 209. Note that $\theta c$ is half an angle formed between the two beams, which pass the focal positions of the first and second light receiving optical systems after being scattered by the measured object and which become parallel to each other, immediately after the two beams are scattered by the measured object.

Note that an optical output signal from the light receiving element 208 includes a beat frequency corresponding to the moving speed of the measured object 203. Meanwhile, the light transmitted through the light splitting element 207 without being reflected is detected by the distance measuring mechanism 209, and the distance between a displacement meter 200 and the measured object 203 is calculated. An angle $\theta i$ of the scattered light against an optical axis of the irradiation light is calculated from the calculated distance between the displacement meter 200 and the measured object 203, and is substituted for $\psi$ in expression (1), and the moving speed V of the measured object is obtained using the wavelength $\lambda$ output from the light source and the observed frequency F.

A distance between the light receiving optical systems 204 and 205, and the measured object 203 is z, a focal length of each of the light receiving optical systems 204 and 205 is fi, and the position of each light receiving optical system is a distance reference in which z = 0. A distance between a center of the optical axis of the irradiation light and a center of the light receiving optical system 204 or 205 is Dci, and a distance between a position where a center of the beam, through which the scattered light propagates, propagates through the light receiving optical system 204 or 205 and a center of the optical axis of the irradiation light is D. A distance between the collection optical element 206, which overlaps the beams of light propagated through the first and second optical paths, and the overlapping position is fc, and a distance between the overlapping position and a line sensor 209 used as a sensor of the distance measuring mechanism is 1LS. Angles of the optical axes of the beams of light when the beams of light that have propagated the first and second optical paths are made to overlap each other are each $\theta c$. When a length between a center of the line sensor 209 and a position where the scattered light is detected is xLS, then, the following holds true.

$$x_{LS} = l_{LS} \times \tan \theta_c$$
$$= l_{LS} \times \frac{z}{z - f_i} \times \frac{1}{f_c} \times D_{ci} \qquad (2)$$

The distance z between the light receiving optical system and the measured object 203 is,

$$z = \frac{x_{LS} \times f_i}{x_{LS} - l_{LS} \times \frac{1}{f_c} \times D_{ci}} \qquad (3)$$

When a pixel size of the line sensor 209 is $\Delta xLS$ and a pixel number is $-N/2 \leq k \leq N/2$, mathematical expressions (2) and (3) are rewritten as

xLS = k × ΔxLS (4), and the following is obtained.

$$z = \frac{k \times \Delta x_{LS} \times f_i}{k \times \Delta x_{LS} - l_{LS} \times \dfrac{1}{f_c} \times D_{ci}} \qquad (5)$$

Accordingly, the uncertainty in the distance direction due to the pixel size is as follows.

$$\Delta z = \frac{\Delta x_{LS} \times (k+1) \times f_i}{\Delta x_{LS} \times (k+1) - l_{LS} \times \dfrac{1}{f_c} \times D_{ci}} - \frac{\Delta x_{LS} \times (k) \times f_i}{\Delta x_{LS} \times (k) - l_{LS} \times \dfrac{1}{f_c} \times D_{ci}}$$

$$= \frac{-\Delta x_{LS} \times f_i \times l_{LS} \times \dfrac{1}{f_c} \times D_{ci}}{\left\{ \Delta x_{LS} \times (k+1) - l_{LS} \times \dfrac{1}{f_c} \times D_{ci} \right\} \times \left\{ \Delta x_{LS} \times (k) - l_{LS} \times \dfrac{1}{f_c} \times D_{ci} \right\}} \qquad (6)$$

The angle θi of the scattered light from the measured object will be described. The length xLS between the center of the line sensor 209 and the position where the scattered light is detected is,

$$x_{LS} = l_{LS} \times \frac{1}{f_c} \times \left( f_i \times \tan\theta_i + D_{ci} \right)$$

$$= l_{LS} \times \frac{f_i}{f_c} \times \tan\theta_i + l_{LS} \times \frac{1}{f_c} \times D_{ci} \qquad (7)$$

and θi is,

$$\theta_i = \tan^{-1}\left( \frac{f_c}{f_i} \times \frac{1}{l_{LS}} \times x_{LS} - \frac{1}{f_i} \times D_{ci} \right) \qquad (8)$$

When expression (8) is rewritten using the pixel size ΔxLS and the pixel number k,

$$\theta_i = \tan^{-1}\left( \frac{f_c}{f_i} \times \frac{1}{l_{LS}} \times k \times \Delta x_{LS} - \frac{1}{f_i} \times D_{ci} \right) \qquad (9)$$

holds true, and the uncertainty of the angle is as follows.

$$\Delta\theta_i = \tan^{-1}\left( \frac{f_c}{f_i} \times \frac{1}{l_{LS}} \times \Delta x_{LS} \times (k+1) - \frac{1}{f_i} \times D_{ci} \right)$$

$$- \tan^{-1}\left( \frac{f_c}{f_i} \times \frac{1}{l_{LS}} \times \Delta x_{LS} \times (k) - \frac{1}{f_i} \times D_{ci} \right) \qquad (10)$$

Since the calculated speed is based on expression (1), depending on the uncertainty of the angle, the speed also becomes uncertain.

First Example Embodiment

Referring to Figs. 2A and 2B, a laser Doppler displacement meter (a velocimeter) of the first example embodiment will be described. Note that the left-right direction of the surface of the paper of Figs. 2A and 2B is the x direction (the right side is +), the up-down direction of the surface of the paper of the same is the z direction (the upper side is +), and a direction perpendicular to the surface of the paper that is orthogonal to both the x direction and the z direction is the y direction (the back side is +). In other words, the measuring device of the present example embodiment detects the displacement and the velocity in the x direction. The x direction is, in other words, a direction that is within a plane including a first light receiving optical system (a first optical system) and an optical axis of a second light receiving optical system (a second optical system) and that is perpendicular to at least either of the above two optical axes. Furthermore, the z direction is an optical axis direction of each of the first and second light receiving optical systems (the first and second optical systems), and the y direction is a direction perpendicular to the optical axis directions of the first and second light receiving optical systems, in other words, is a direction perpendicular to a plane including the two optical axes of the first and second light receiving optical systems described above. The position of the measured object in the z direction is detected, and the result is used to improve the detection accuracy of the displacement and the velocity of the measured object in the x direction.

A laser diode having a wavelength of 650 nm is used in the light source 201. The output light becomes a parallel beam through the collimator lens 202 and is irradiated on the measured object 203. The first light receiving optical system 204 and the second light receiving optical system 205 each have a diameter of 10 mm, and each use a lens having a focal length of 10 mm. The lens of each light receiving optical system is disposed so that the center of the lens is at a position 10 mm away from the optical axis of the irradiation light. The collection optical element 206 has a diameter of 25 mm and uses a lens having a focal length of 25 mm. A half mirror (a separation optical system or a superimposing optical system) serving as the light splitting element 207 is inserted between the lens and the focal position of the collection optical element 206 so that a portion of the scattered light propagates to the light receiving element 208. The light receiving element 208 is a photodetector having a sensor of 1 mm in diameter and one having a response speed of 10 MHz is used. A line sensor is used for the distance measuring mechanism 209. The line sensor 209 is disposed at a distance of 20 mm from the light condensing position of the light that has been transmitted through the half mirror 207, so as to receive the scattered light propagating the first optical path. A pixel size of the line sensor 209 is 10 $\mu$m and includes 2048 pixels. Accordingly, the sensor size is about 20 mm.

With the configuration described above, the distance between the displacement meter 200 and the measured object 203, which is a measurable depth range, becomes 30 mm to infinity. The measurable speed becomes larger as the distance increases, and when 1 m far, measurement up to a speed of about 162 m/sec can be performed. However, the speed resolution becomes degraded and the uncertainty becomes larger. The uncertainty is about 12.5% when 1 m away. In the present example embodiment, the distance between the displacement meter 200 and the measured object 203 is about 100 mm. In such a case, the largest measurable speed is about 14.7 m/sec and the error is about 1% in the range of $\pm$10 mm.

The present example embodiment is capable of providing a displacement meter or a velocimeter having a wide allowable range regarding the distance between the measuring device and the measured object. Furthermore, a displacement meter (a velocimeter) capable of increasing a measurable region, in particular, a displacement meter (a velocimeter) having a large measurable region in a distance direction from a measuring apparatus can be provided. Note that the optical element described above is used in the present example embodiment; however, not limited to the optical element described above, any element having a similar function may be used. Furthermore, the numerical values may be changed according to the purpose. For example, the light source is not limited to a laser diode, and the wavelength may be selected according to the measured object. Furthermore, not limited to a single lens optical system, the light receiving optical system or the collection optical system may use a plurality of lenses or may use a mirror or the like. The light splitting element is not limited to a half mirror and a diffraction grating or the like may be used.

Second Example Embodiment

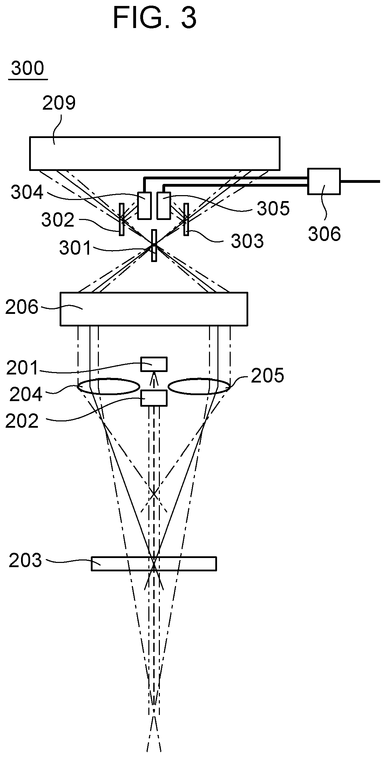

Referring to in Fig. 3, a laser Doppler displacement meter (a velocimeter) of a second example embodiment will be described. The coordinate system is the same as that of the first example embodiment (Fig. 1).

Different from the first example embodiment, an interference half mirror 301 is disposed at a position where the beams of light scattered by the collection optical element 206 are collected and overlap each other. By transmission through the interference half mirror 301, first interference light and second interference light are generated. Portions of the first and second interference light are reflected by half mirrors 302 and 303 serving as first and second light splitting elements, are received by first and second light receiving units 304 and 305, and are converted into first and second interference signals. A difference between the first and second interference signals is detected with a difference detector 306. The DC components are canceled out and the vibrational components alone are expected. Note that in order for the first and second light receiving units 304 and 305 perform the detection efficiently, an optical system may be interposed between the half mirror 302 and the light receiving unit 304 and between the half mirror 303 and the light receiving unit 305 so that the wavefronts are corrected.

In the present example embodiment, the DC components can be removed and the Doppler frequency components alone can be extracted, and the SN ratio increases.

The half mirror 207 that splits the light to measure the distance may be situated between the collection optical element 206 and the interference half mirror 301, or between the interference half mirror 301 and the light receiving unit 302 or 303.

Third Example Embodiment

In a laser Doppler displacement meter (a velocimeter) of a third example embodiment, apertures are inserted at the focal positions between each of the light receiving optical systems 204 and 205, and the measured object 203.

In the present example embodiment, the optical path of the scattered light is limited; accordingly, the angle of the scattered light is limited and the accuracies in measuring the distance and the speed can be increased.

Fourth Example Embodiment

In case of a laser Doppler displacement meter (a velocimeter) of a fourth example embodiment, the irradiation light is not parallel light (collimated light), and an irradiation lens is inserted between the light source and the measured object so that a condensing point is provided at a specific distance. The laser beam has good linearity and is propagated to a distance as parallel light; however, the laser beam is actually diverged slightly. Accordingly, when the distance between the displacement meter and the measured object becomes large, a beam diameter of the irradiation light becomes larger and an increase in the scattering angle becomes greater. Accordingly, the speed accuracy is degraded. In the present example embodiment, the beam diameter is limited even at a distance, and an increase in the angle of the received scattered light is suppressed and the speed accuracy can be increased.

In the present example embodiment, the light is collected at a distance of 10 m. The diameter of the beam incident on the irradiation lens is 4 mm, and the diameter of the beam at a distance of 10 m is 2 mm.

Fifth Example Embodiment

In a laser Doppler displacement meter (a velocimeter) of a fifth example embodiment, a magnifying optical system is inserted in front of the line sensor 209 used in the distance measuring mechanism that measures the distance between the measuring device and the measured object. In measuring the distance with the measuring device of the present example embodiment, the difference in the distance becomes the difference in the angle of the scattered light incident on the optical system and, as a result, the difference is reflected to the difference in the position incident on the line sensor. Accordingly, by inserting the magnifying optical system, the difference in the position on the line sensor becomes large, and the distance resolution and the angle resolution can be improved. Accordingly, the calculated speed resolution is also improved.

Sixth Example Embodiment

In a laser Doppler displacement meter (a velocimeter) of a sixth example embodiment, a correction optical system is inserted in front of the line sensor 209 used in the distance measuring mechanism. As in expression (3) or expression (8), the distance z or the angle $\theta i$, and the position of the scattered light received by the line sensor are not in a linear function relationship. Accordingly, there is an issue that when the distance between the displacement meter and the measured object becomes large, the resolution (the detection resolution) of the distance z or the angle $\theta i$ becomes degraded (becomes decreased).

Accordingly, in the present example embodiment, the distance z or the angle $\theta i$, and the position xLS of the scattered light received by the line sensor is, within a certain distance range (in the range of 100 mm $\pm$ 10 mm in the present example embodiment), set to be in a linear function relationship with the correction optical system.

With the present example embodiment, even when the distance between the displacement meter and the measured object changes, the resolution of the distance z or the angle $\theta i$ does not change, and the displacement can be measured with a uniform accuracy (compared to a case in which there is no correction optical system, the displacement can be measured with a uniform accuracy in which the amount of change in the resolution can be reduced or the change in the resolution can be suppressed).

Seventh Example Embodiment

In a laser Doppler displacement meter (a velocimeter) of a seventh example embodiment, an in-range correction optical system is inserted in front of the line sensor 209 used in the distance measuring mechanism. The in-range correction optical system increases the resolution of the distance z or the angle $\theta i$ when within a certain distance range (in the range of 100 mm $\pm$ 10 mm in the present example embodiment), and degrades the resolution (the detection resolution) when outside of the distance range. In other words, the detection resolution of the distance between the displacement meter and the measured object when within the predetermined range is set higher than the detection resolution of the distance when outside the predetermined range (set at a higher resolution).

With the present example embodiment, a highly accurate displacement measurement can be carried out when within a specific distance range even when the pixel size and pixel number of the line sensor are limited.

Eighth Example Embodiment

A laser Doppler displacement meter (a velocimeter) of an eighth example embodiment will be described. In the present example embodiment, a case in which the light receiving optical system 204 and the light receiving optical system 205 are optical systems functioning like a single lens having a focusing point with the measured object is assumed. In such a case, only the light propagating outside the light receiving optical systems, functioning like a single lens, with respect to the optical axis of the irradiation light (outside the region between the optical axes of the two optical systems) is received. Accordingly, in the eighth example embodiment, a lens in which the inner sides of the light receiving optical systems functioning like a single lens with respect to the optical axis of the irradiation light (the region between the optical axes of the two optical systems) are cut away is used.

The displacement meter can be reduced in size and weight with the present example embodiment.

Ninth Example Embodiment

In the example embodiments described above, a pixel position where the light intensity becomes the largest, among the waveform data (intensity distribution or data waveform) of the scattered light detected by the line sensor (the photoelectric conversion element) 209 used in the distance measuring mechanism, has been used. In other words, the distance between the measuring device and the measured object or the incident angle of the scattered light from the measured object have been calculated based on the pixel position (the center position of the pixel) where the light intensity becomes the largest. Specifically, the calculation described above has been carried out based on expression (3) or expression (8).

In the laser Doppler displacement meter (the velocimeter) of the ninth example embodiment, data processing is performed on the waveform data (light intensity distribution) of the scattered light detected (obtained) by the line sensor 209 used in the distance measuring mechanism.

Data processing such as interpolation or fitting (or both) is performed. By performing such data processing, a peak detection accuracy (the accuracy of detecting the peak position in the light intensity distribution) can be increased, and the accuracy in the distance to the measured object or the incident angle of the scattered light from the measured object can be increased. Furthermore, ultimately, the detection accuracy of the displacement amount in the measuring direction of the measured object (the left-right direction in Figs. 2A and 2B) and the detection accuracy of the speed can be improved.

Tenth Example Embodiment

In a laser Doppler displacement meter (a velocimeter) of a tenth example embodiment, the beam of light propagating each of the first and second scattered light optical paths is detected with a distance measuring mechanism. The distance and the angle are calculated by calculating and averaging the detected data. Alternately, the distance and the angle may be calculated from the distance between the two peak positions.

As in the present example embodiment, by using two signals, the difference between the optical paths of the first and second scattered light can be averaged, and the load in adjustment can be reduced.

Eleventh Example Embodiment

In a laser Doppler displacement meter (a velocimeter) of a eleventh example embodiment, the light receiving element is a multisensor. In a laser Doppler displacement meter, due to the canceling out of light caused by random overlapping of the scattered light, a phenomenon called a dropout in which the intensity of the interference signal becomes nil can occur. In the present example embodiment, since there are a plurality of light receiving elements, even if the intensity of the interference signal in either of the light receiving portions becomes nil, the signal is output from another light receiving portion. Accordingly, the dropout can be avoided.

Twelfth Example Embodiment

A twelfth example embodiment relates to a measurement system. In the measurement system, among the mechanisms in the laser Doppler displacement meter (the velocimeter) described above, the distance measuring mechanism is omitted and a different distance measuring sensor (a device capable of acquiring distance information) is used. In the present example embodiment, a distance measuring sensor using triangulation with a laser is used. A wavelength of the laser beam used in the distance measuring sensor is 532 nm, which is different from the wavelength (650 nm) used in the displacement meter. By making the wavelengths different from each other by 100 nm or more (the long wavelength is 105% or more of the short wavelength, more preferably, 110% or more), interference between the two is avoided.

With the present example embodiment, the distance measuring accuracy can be improved further, and the accuracy of the angle of the scattered light and the accuracy of the measured speed can be increased.

Note that the distance measuring sensor does not have to be one using triangulation with a laser and may use pattern projection or a Michelson interferometer. Furthermore, not limited to a noncontact sensor, the sensor may be a contact sensor.

Thirteenth Example Embodiment

In a laser Doppler displacement meter (a velocimeter) of a thirteenth example embodiment, the displacement of the measured object in the y direction that is orthogonal to the displacement direction (x direction) that the first and second light receiving optical systems measure is measured. Note that the y direction is a direction perpendicular to a plane formed by the two optical axes of the first and second light receiving optical systems (a direction perpendicular to the direction of the optical axis of the irradiation light). A feature of the present example embodiment is that third and fourth light receiving optical systems and a second light receiving element that measure the displacement (the speed) of the measured object in the y direction are included. Referring to the drawings, the x direction is the left-right direction of the paper surface, the z direction is the up-down direction of the paper surface, and the y direction is the depth direction of the paper surface.

If the measured object has a surface that uniformly scatters light, the scattered light propagates in all directions. In the example embodiments described above, the displacement in a first direction (the x direction) is measured with the first and second light receiving optical systems. In the present example embodiment, the displacement in a second direction (the y direction) orthogonal to the first direction (the x direction) can be measured by further having the third and fourth light receiving optical systems and the second light receiving element.

Furthermore, displacement in an oblique direction can be calculated from the first and second displacement.

Fourteenth Example Embodiment

A laser Doppler displacement meter (a velocimeter) of a fourteenth example embodiment has a configuration that is the same as that of the tenth example embodiment. Intensity values of first and second data of the beams of light that have propagated the first and second scattered light optical paths, which have been measured by the distance measuring mechanism, are compared and the inclination of the measured object with respect to the optical axis of the irradiation light is determined.

Generally, the light quantity of the scattered light directly decreases about the reflection optical axis. Accordingly, when the measured object is inclined, the quantity of the light propagating the first and second scattered light optical paths differs. Accordingly, it is possible to determine whether the measured surface of the measured object is inclined with respect to the optical axis of the irradiation light by comparing the intensity values of the first and second data measured by the distance measuring mechanism.

In the present example embodiment, when installing the displacement meter, comparison between first data indicating the intensity of the light that has reached the distance measuring mechanism via the first light receiving optical system, and second data indicating the intensity of the light that has reached the distance measuring mechanism via the second light receiving optical system is made. As a result of the comparison, when out of balance, a drive mechanism that automatically adjusts the optical axis of the irradiation light or the optical axes of the first and second light receiving optical systems is controlled.

By so doing, determination of whether the measured surface of the measured object is inclined is determined while measuring the displacement, and the distortion of the transport system or the measured object can be detected. Note that it is desirable that the inclination of the irradiation optical system (or the optical axis thereof) is automatically adjusted in a case in which when comparison between the first data (the light intensity of the first scattered light optical path) and the second data (the light intensity of the second scattered light optical path) is made, the large data is 120% or more (more preferably, 105% or more) of the small data.

Furthermore, in the initial installing step, the inclination of the optical system may be adjusted based on the measurement result of the balance of the intensity values of the two.

Fifteenth Example Embodiment

In a laser Doppler displacement meter (a velocimeter) of a fifteenth example embodiment, a length 1 of the measured object is, using the following expression (11), calculated with displacement x in the moving direction measured by the displacement meter, and distance displacement z measured by the distance measuring mechanism.

$$l = \sqrt{x^2 + z^2} \quad (1\ 1)$$

Furthermore, by using the displacement meter of the thirteenth example embodiment, displacement y orthogonal to both x and z can be measured, and the length 1 of the measured object can be calculated by the following expression.

$$l = \sqrt{x^2 + y^2 + z^2} \quad (1\ 2)$$

With the present example embodiment, an accurate length can be calculated even when the measured object vibrates in a direction other than the moving direction. In particular, since fabric, wire, and the like vibrate easily, the displacement error tends to become large. The present example embodiment is capable of reducing the size of the error.

Sixteenth Example Embodiment

A sixteenth example embodiment is an example of a processing device using the displacement meter of either one of the laser Doppler displacement meters (the velocimeters) of the first to fifteenth example embodiment. The processing device includes a processing unit that processes a processed object (the measured object), a control unit that controls the processing unit, and an input device that inputs a control signal to the control unit. In the processing device, a case in which the length of the processed object processed with the processing unit becomes a preset length of case in which the processed object has moved (moved after being processed) a preset distance is sensed (detected). The above sensing triggers the input unit to transmit, to the control unit, a control signal that stops the forming (or moving) operation of the processed object by the processing unit, or that cuts the processed object.

With the present example embodiment, since the measured object can be stopped or can be cut at an accurate length, a highly accurate and quick processing can be performed.

Seventeenth Example Embodiment

In a processing device of a seventeenth example embodiment, feedback of the x, y, and z displacement of the measured object is given and processing can be performed in sync when processing on the fly.

High-precision processing can be performed with the present example embodiment even when the measured object moves in the direction different from the conveying direction.

As described above, the example embodiments are each capable of providing a displacement meter or a velocimeter having a wide allowable range regarding the distance between the measuring device and the measured object. Furthermore, a displacement meter (a velocimeter) capable of increasing a measurable region, in particular, a displacement meter (a velocimeter) having a large measurable region in a distance direction from a measuring apparatus can be provided. While preferable example embodiments of the present disclosure have been described, the present disclosure is not limited to the example embodiments and may be deformed and modified within the gist of the present disclosure.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A measuring device that measures a displacement amount or a velocity of a measured object (203), the measuring device comprising:

an irradiation optical system (202) that shapes light from a light source (201) into an irradiation beam and that irradiates the measured object (203) with the irradiation beam;
a collection optical system (206) that collects a first beam emitted from the measured object (203) and a second beam emitted from the measured object (203) in a direction different from that of the first beam so as to overlap the first beam and the second beam on each other;
a first detector (208) that detects superimposed light in which the first beam and the second beam, in an emitted beam emitted from the collection optical system (206), are overlapped on each other; and
a second detector (209) that detects a partial beam of the emitted beam emitted from the collection optical system (206),
wherein a detection result of the second detector (209) changes according to a distance (z) between the measuring device and the measured object (203), and
wherein based on a detection result of the first detector (208) and the detection result of the second detector (209), the measuring device outputs either the displacement amount or the velocity (V).

2. The measuring device according to Claim 1,
wherein the irradiation beam is a single beam, and
wherein the irradiation optical system (202) irradiates the measured object (203) with the single beam.

3. The measuring device according to Claim 1 or Claim 2, wherein the irradiation optical system (202) is a means configured to, after shaping the light from the light source (201) into a single parallel beam or a single converged beam, irradiate the single parallel beam or the single converged beam on the measured object (203).

4. The measuring device according to any one of Claims 1 to 3, wherein the irradiation optical system (202) irradiates the irradiation beam on the measured object (203) while an absolute value of an angle at which the irradiation beam is incident on the measured object (203) is less than 10 degrees.

5. The measuring device according to any one of Claims 1 to 4, wherein the second detector (209) is a means configured to change an output signal according to the distance between the measuring device and the measured object (203).

6. The measuring device according to any one of Claims 1 to 5, wherein the second detector (209) is a means configured to change an output signal according to an angle at which the light from the measured object (203) is incident on the collection optical system (206).

7. The measuring device according to Claim 5, wherein the change in the output signal is a change occurring due to a change in a position at which the partial beam is incident on a photoelectric conversion element in the second detector (209).

8. The measuring device according to any one of Claims 1 to 7, wherein the collection optical system (206) includes a first optical system that receives the first beam and a second optical system that receives the second beam, the first optical system and the second optical system being optical systems different from each other.

9. The measuring device according to Claim 8,
wherein the first and second optical systems are disposed so that a focal point is positioned between each of the first and second optical systems, and the measured object (203), and
wherein an aperture is provided between the first optical system and the measured object (203) where the focal point is positioned and between the second optical system and the measured object (203) where the focal point is positioned.

10. The measuring device according to Claim 8, further comprising:
a third optical system that detects a displacement amount or a velocity of the measured object (203) in a direction perpendicular to a plane including both an optical axis of the first optical system and an optical axis of the second optical system.

**11.** The measuring device according to Claim 8,
wherein whether the measured object (203) is inclined against an optical axis of the irradiation light is determined by comparing an intensity of the light that has reached the second detector (209) via the first optical system and an intensity of the light that has reached the second detector (209) via the second optical system.

**12.** The measuring device according to any one of Claims 1 to 11, further comprising:
a separation optical system (207) that separates the emitted beam emitted from the collection optical system (206) into a beam emitted towards the first detector (208) and a beam emitted towards the second detector (209), the separation optical system overlapping, on the first detector (208), the first beam and the second beam on each other.

**13.** The measuring device according to Claim 8,
wherein the displacement amount or the velocity of the measured object (203) is output based on a detection result of a displacement amount or a velocity of the measured object (203) in each of a direction perpendicular to a plane including both an optical axis of the first optical system and an optical axis of the second optical system and a direction extending inside the plane and perpendicular to the optical axis of the first optical system.

**14.** The measuring device according to any one of Claims 1 to 13,
wherein the second detector (209) is a line sensor.

**15.** The measuring device according to any one of Claims 1 to 14, further comprising,
a correction optical system (206) that suppresses a decrease in resolution of a distance between the measuring device and the measured object (203) based on a detection result of the second detector (209), the decrease being caused by increase in a distance between the measuring device and the measured object (203).

**16.** The measuring device according to any one of Claims 1 to 15, further comprising:
an optical system in which when a distance between the measuring device and the measured object (203) is within a predetermined range, a detection resolution of a distance between the measuring device and the measured object (203) is set higher than that when the distance is outside the predetermined range.

**17.** The measuring device according to any one of Claims 1 to 16,
a detection resolution of a distance between the measuring device and the measured object (203) is increased by performing interpolation, fitting, or both on waveform data acquired by the second detector (209).

**18.** A measurement system compromising:

a measuring device that measures a displacement amount or a velocity of a measured object (203), the measuring device including an irradiation optical system (202) that shapes light from a light source (201) into an irradiation beam and that irradiates the measured object (203) with the irradiation beam, a collection optical system (206) that collects a first beam emitted from the measured object (203) and a second beam emitted in a direction different from that of the first beam so as to overlap the first beam and the second beam on each other, a detector that detects superimposed light in which the first beam and the second beam, in an emitted beam emitted from the collection optical system (206), are overlapped on each other; and
a distance measuring sensor that measures a distance between the measured object (203) and the measuring device;
a displacement amount or a velocity of the measured object (203) is output by correcting the displacement amount or the velocity output by the measuring device using distance information output by the distance measuring sensor.

**19.** A processing device comprising:

a processing unit that processes a processed object;
the measuring device according to any one of Claims 1 to 17 that measures a displacement amount or a velocity of the processed object; and
a control unit that controls the processing unit according to a measurement result of the measuring device.

# FIG. 1

<u>100</u>

# FIG. 2A

# FIG. 2B

# FIG. 3

Europäisches
Patentamt

European
Patent Office

Office européen
des brevets

## EUROPEAN SEARCH REPORT

Application Number

EP 19 17 4475

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H05 40176 A (MITSUBISHI ELECTRIC CORP; KAWASAKI STEEL CO) 19 February 1993 (1993-02-19) | 1-17,19 | INV. G01B11/14 G01S17/58 G01P3/36 |
| Y | * paragraphs [0031], [0032], [0034] - [0037]; figures 1,2 * | 18 | |
| Y | US 2007/229798 A1 (CATTIN VIVIANE [FR] ET AL) 4 October 2007 (2007-10-04) | 18 | |
| A | * paragraphs [0028] - [0032]; figure 4 * | 1-17,19 | |
| A | US 6 323 949 B1 (LADING LARS [DK] ET AL) 27 November 2001 (2001-11-27) * figure 6A * | 1-17,19 | |

TECHNICAL FIELDS
SEARCHED (IPC)

G01B
G01S
G01P

The present search report has been drawn up for all claims

| Place of search | Date of completion of the search | Examiner |
|---|---|---|
| Munich | 18 September 2019 | Biedermann, Benjamin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 19 17 4475

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

| | |
|---|---|
| Europäisches Patentamt<br>European Patent Office<br>Office européen des brevets | **LACK OF UNITY OF INVENTION**<br>**SHEET B** |

**Application Number**

**EP 19 17 4475**

The Search Division considers that the present European patent application does not comply with the requirements of unity of invention and relates to several inventions or groups of inventions, namely:

    1. claims: 1-19

        Providing an alternative beam geometry (invention 1) + How to improve the accuracy of velocity measurement of a combined distance and velocity sensor (invention 2)

    1.1. claims: 1-17, 19

        Providing an alternative beam geometry

    1.2. claim: 18

        How to improve the accuracy of velocity measurement of a combined distance and velocity sensor

                           ---

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 19 17 4475

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2019

| Patent document cited in search report | | Publication date | Patent family member(s) | | Publication date |
|---|---|---|---|---|---|
| JP H0540176 | A | 19-02-1993 | JP | 2934066 B2 | 16-08-1999 |
| | | | JP | H0540176 A | 19-02-1993 |
| US 2007229798 | A1 | 04-10-2007 | AT | 444499 T | 15-10-2009 |
| | | | EP | 1763684 A1 | 21-03-2007 |
| | | | FR | 2872920 A1 | 13-01-2006 |
| | | | JP | 4987705 B2 | 25-07-2012 |
| | | | JP | 2008506094 A | 28-02-2008 |
| | | | US | 2007229798 A1 | 04-10-2007 |
| | | | WO | 2006013246 A1 | 09-02-2006 |
| US 6323949 | B1 | 27-11-2001 | AU | 2921795 A | 09-02-1996 |
| | | | DE | 69512914 D1 | 25-11-1999 |
| | | | DE | 69512914 T2 | 20-04-2000 |
| | | | EP | 0770219 A1 | 02-05-1997 |
| | | | JP | H10503279 A | 24-03-1998 |
| | | | US | 6323949 B1 | 27-11-2001 |
| | | | WO | 9602009 A1 | 25-01-1996 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7229911 A